# EUROPÄISCHE PATENTSCHRIFT

(11) **EP 2 260 059 B1**
(45) Veröffentlichungstag und Bekanntmachung des Hinweises auf die Patenterteilung: **03.07.2013**
(21) Anmeldenummer: 09707163.3
(22) Anmeldetag: 06.02.2009
(51) Int. Cl.: C08B 1/00

(54) **VERFAHREN UND VORRICHTUNG ZUR HERSTELLUNG VON FORMKÖRPERN**
METHOD AND DEVICE FOR THE PRODUCTION OF MOLDED BODIES
PROCÉDÉ ET DISPOSITIF DE PRODUCTION DE CORPS MOULÉS

(30) Priorität: 08.02.2008 DE 102008008342; 09.05.2008 DE 102008023064
(43) Veröffentlichungstag der Anmeldung: 15.12.2010
(73) Patentinhaber: LIST Holding AG, 4422 Arisdorf (CH)
(72) Erfinder: DIENER, Andreas, 09603 Grossschirma (DE); TRETZACK, Oliver, 79686 Hasel (DE); SCHILDKNECHT, Helmut, Charlotte, NC 28226 (US); WITTE, Daniel, 79639 Grenzach-Wyhlen (DE)
(74) Vertreter: Weiss, Peter
(86) Internationale Anmeldenummer: PCT/EP2009/000837
(87) Internationale Veröffentlichungsnummer: WO 2009/098073

(56) Entgegenhaltungen:
- WO-A-01/58960
- WO-A-02/20885
- DE-A1- 4 441 468
- DE-C1- 19 837 210
- US-A- 4 324 593

## Beschreibung

Die vorliegende Erfindung betrifft ein Verfahren gemäss dem Oberbegriff des Anspruchs 1.

### STAND DER TECHNIK

Als Beispiel für Fasern, jedoch keineswegs einschränkend oder abschliessend, soll die Viskosefaser erwähnt werden.

Viskosefasern sind Fasern, die aus dem Grundmaterial Zellulose bestehen und über das Viskoseverfahren industriell hergestellt werden. Die chemische Natur der Viskosefasern gleicht der von Baumwollfasern.

Ein ähnliches Produkt wie Viskosefasern sind Modalfasern. Sie bestehen ebenfalls zu 100% aus Zellulose und werden, so wie Viskosefasern, aus natürlichem Zellstoff hergestellt. Durch einen etwas unterschiedlichen Prozess wird jedoch eine höhere Faserfestigkeit und verbesserte Fasereigenschaften erreicht.

Einem Verspinnen von Fasern, z.B. aus Zellulose, geht die Herstellung einer Zelluloselösung voraus. Hierbei wird die Zellulose gelöst, wobei als Lösungsmittel meist eine Mischung umfassend Wasser und das tertiäre Aminoxid NMMO (N-Methylmorpholin-N-Oxid) verwendet wird. Um den Prozess der Lösungs-Herstellung zu verbessern oder zu beschleunigen, kann beispielsweise eine Base zugegeben werden, wie dies in der US 4,324,593 offenbart wird. Die Herstellung der Lösung erfolgt häufig in einem Mischkneter bzw. Knetreaktor. Ein derartiges Verfahren ist beispielsweise in der DE 198 37 210 C 1 dargestellt. Im Mischkneter wird die Lösung meist erwärmt und es erfolgt der Eintrag oft grosser Scherkräfte. Über verschiedene Einrichtungen (Schneckenförderer, Pumpen, etc.) kann die so hergestellte Lösung dann einem Verbraucher zugeführt werden, was beispielsweise in der WO 02/20885 A1 dargestellt Ist. Wie in der DE 198 37 210 C 1 dargestellt, kann auch zuerst eine Zellulose-Suspension und danach eine Zelluloselösung hergestellt werden.

Ebenfalls in die Klasse der zellulosischen Fasern sind die Tencel- und Lyocellfasern einzuordnen. Bei den Lyocellfasern wird der Zellstoff durch das ungiftige Lösungsmittel NMMO ohne vorherige Reaktion mit Natronlauge und Derivatisierung zum Xanthogenat direkt und unverändert aufgelöst. Das Verspinnen der Lyocellfasern erfolgt in einem verdünnten, wässrigen NMMO-Bad, wobei die Löslichkeitsgrenze der Zellulose unterschritten und dadurch ein Faden gebildet wird. Zu diesem Zweck wird die entsprechende Spinnlösung durch Spinndüsen gedrückt. Dieses Lyocell-Verfahren wird beispielsweise in der DE 1 713 486, US-A-3 447 939 oder GB 8 216 566 beschrieben. Die Herstellung der geeigneten Spinnlösung erfolgt beispielsweise in einem horizontal arbeitenden Knetreaktor, wie dies in der DE 198 37 210 oder der WO02/20885 A1 aufgezeigt ist.

In diesen Vorrichtungen und nach den bekannten Verfahren wird die Spinnlösung in der für den Spinnprozess notwendigen weiter verarbeitbaren Viskosität und der dazugehörigen Zellulosekonzentratlon hergestellt. Die entsprechenden Einrichtungen zum Verspinnen können aber nur eine Spinnlösung mit niedriger Viskosität verarbeiten, was aber die Effektivität des Prozesses der Herstellung der Spinnlösung wesentlich reduziert, Für spezielle Anwendungen sind sehr niedrige Viskositäten und damit niedrige Zellulosegehalte notwendig, wobei diese Spinnlösung dann mit der bekannten Technologie nicht mehr effektiv hergestellt werden kann.

Ein weiteres Verfahren zur Herstellung von Zelluloselösung wird beispielsweise in der WO 01/58960 A1 beschrieben. Hier wird eine Zelluloselösung durch Lösen der Zellulose in einem tertiär Aminoxid-Pyrrolidonat, vorzugsweise NMMO-Pyrrolidonat hergestellt. Zellulose wird in tertiär Aminoxid-Pyrrolidonaten, vorzugsweise NMMO-Pyrrolidonate, gelöst und durch Verformen, Koagulation und anschliessende Entfernung des Lösungsmittels werden Formkörper hergestellt.

Aus der DE 44 41 468 A1 geht ein Verfahren zur Herstellung einer homogenen Lösung von Zellulose in wasserhaltigern N-Methylmorpholin-N-oxid aus einer Suspension der Zellulose in wässrigern N-Methylmorpholin-N-oxid hervor. Die Suspension ist dadurch gekennzeichnet, dass man die Suspension in einer ersten Verdampfungsstufe mit geringem Scherfeld und grosser Wärmeaustauschfläche und in einer zweiten Verdampfungsstufe mit starkem Scherfeld und geringer Wärmeaustauschfläche zur homogenen Lösung entwässert.

Die US 4,324,593 offenbart weiterhin eine Lösung, welche Zellulose enthält, die in einer Mischung aus einem tertiären Amin-N-oxid-Lösungsmittel für Zellulose und einem Bestandteil gelöst ist, welcher die Lösungsrate der Zellulose in dem Lösungsmittel erhöht, wie beispielsweise ein tertiäres Amin oder andere Bestandteile, welche den pH-Wert der Lösung erhöhen.

### AUFGABE

Der vorliegenden Erfindung liegt die Aufgabe zugrunde, ein Verfahren und eine Anlage bereitzustellen, welche sowohl die effektive Herstellung einer Spinnlösung als auch das Verspinnen ermöglicht.

### LÖSUNG DER AUFGABE

Zur Lösung der Aufgabe führt, dass die Spinnlösung vor dem Verspinnen ein weiteres Mal verdünnt wird, geeignet, um ein Niveau der für die Spinnanlage benötigten Viskosität bzw, Zellulosekonzentration zu erhalten.

Welche Faser hergestellt wird, ist von untergeordneter Bedeutung. Vorzugsweise werden Filamente, Vliesse bzw. Filamentgarn hergestellt. Es können aber auch Filme, Hohlfasern, Membranen od. dgl. hergestellt werden. Das Verspinnen der Lösung kann mit bekannten Spinndüsen zur Herstellung von Fasern, Schlitzdüsen oder Hohlfadenspinndosen erfolgen. Im Anschluss an das Verspinnen, d.h. vor dem Einbringen der geformten Lösung in das Koagulationsbad, kann diese auch verstreckt werden.

Als Lösungsmittel wird bevorzugt ein tertiäres Aminoxid, insbesondere ein Aminoxid-Monohydrat verwendet. Jedoch soll darauf die Erfindung nicht beschränkt sein. Auch ist die Erfindung nicht auf Zellulose beschränkt, umfasst werden auch Stoffe, wie Proteine, Polylaktide oder Stärke oder ein Gemisch dieser Stoffe.

Der zu lösende Stoff soll bei Beginn des Verfahrens einen signifikanten Wasseranteil von 1 % bis 80% aufweisen. Er wird dann mit dem Lösungsmittel aufgelöst. Der Wassergehalt wird im Verfahren auf die Konzentration des Lösefensters reduziert.

Am Ende der ersten Stufe des Verfahrens soll z. B. eine Spinnlösung mit einer Konzentration des zu lösenden Stoffes von 12% bis 28% in Aminoxid-Monohydrat hergestellt werden. Diese Spinnlösung wird nun aber nicht zwingend in einem Pufferbehälter zwischengelagert. Soll sie dann für das Verspinnen bereitgestellt werden, wird sie, bevorzugt wieder mit Aminoxid-Monohydrat, auf eine Lösung verdünnt, die in den Spinnanlagen leicht versponnen werden kann. Hierzu wird nach einem Vorschlag der vorliegenden Erfindung die Spinnlösung mittels einer volumetrischen Pumpe unter Überdruck gefördert, während mittels einer zweiten volumetrischen Pumpe Aminoxid-Monohydrat in den Stoffstrom dosiert wird. Dabei sind die beiden Pumpen so aufeinander abgestimmt, dass die Spinnlösung mit einer gewünschten niedrigen Konzentration von 4% bis 14% des gelösten Stoffes in Aminoxid-Monohydrat entsteht. Dabei wird die verdünnte Spinnlösung in einem Mischer behandelt, der eine beliebige Ausgestaltung haben kann. Dieser Mischer dient ggf. zusätzlich der Pufferung.

Gegebenenfalls wird die homogenisierte Spinnlösung nach dem Mischer mit oder ohne Druckerhöhungspumpe durch einen Spinnlösungsfilter gedrückt und dabei nochmals homogenisiert. Der Filter hat bevorzugt eine Maschenweite von 1 bis 500 mµ.

Zur Kontrolle der Spinnlösung wird der optische Index (Brechungsindex) und die Temperatur der Spinnlösung sowie des Aminoxid-Monohydrats vor dem Mischer und nach dem Mischer bevorzugt online kontrolliert. Der optische Index sollte zwischen 1.48 und 1.49 liegen.

Um eine Änderung der Konsistenz der Spinnlösung zu verhindern, sollen alle Rahrleitungen, Pumpen, Mischer, d.h., möglichst alle Anlagenteile, mit denen die Spinnlösung, gleich in welchem Aggregatszustand, in Verbindung kommt und auch die Leitungen des Aminoxid-Monohydrats beheizt werden. Als Temperatur wird ein Bereich von 80°C bis 120°C gewählt.

Des weiteren sollen alle Anlagenteile, die Spinnlösung, Aminoxid-Monohydrat und/oder verdünnte Spinnlösung beinhalten, durch Druck- und Temperatursensoren überwacht werden und gegen einen unzulässigen Überdruck abgesichert sein. Dies kann beispielsweise durch Berstscheiben geschehen.

Bei der Zwischenlagerung in Pufferbehältern ist darauf zu achten, dass auch diese beheizt sind und die Spinnlösung blasenfrei ein- und ausgetragen wird. Das Austragen geschieht bevorzugt unter einem Vordruck, der beispielsweise durch Beaufschlagung mit Stickstoff auf der Produktfläche erzeugt wird. Dieser Stickstoff sollte zusätzlich noch leicht angefeuchtet werden.

### FIGURENBESCHREIBUNG

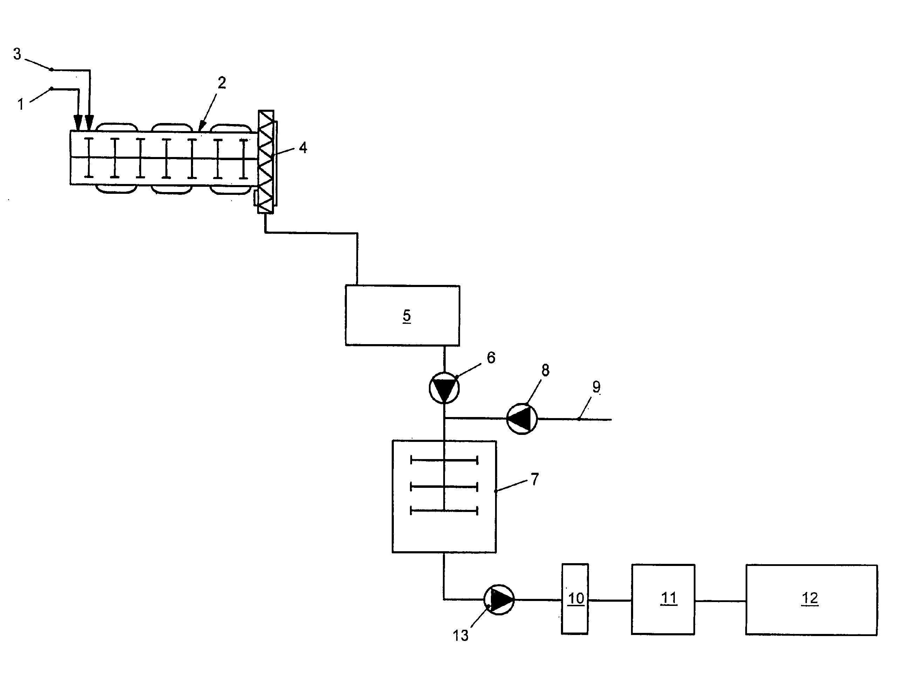

Weitere Vorteile, Merkmale und Einzelheiten der Erfindung ergeben sich aus der nachfolgenden Beschreibung bevorzugter Ausführungsbeispiele sowie anhand der Zeichnung; Diese zeigt in ihrer einzigen Figur ein blockschaltbildliches Schema für das erfindungsgemässe Verfahren zur Herstellung von Formkörpern aus nachwachsenden Rohstoffen.

Die hierfür notwendige Zellulose wird über die Zuleitung 1 einem Knetreaktor 2 zugeführt. Derartige Knetreaktoren sind beispielsweise aus der DE 199 40 521 A1 oder der DE 41 18 884 bekannt. Auf diese Knetreaktoren ist jedoch nicht die Erfindung beschränkt. Von der Erfindung werden alle Behandlungseinrichtungen umfasst, in denen nachwachsende Rohstoffe einer Behandlung zu einem späteren Verspinnen unterzogen werden können.

Im vorliegenden Ausführungsbeispiel erfolgt die Behandlung des nachwachsenden Rohstoffs mittels einem Lösungsmittel, bevorzugt Aminoxid-Monohydrat, welches über eine weitere Zuleitung 3 dem Knetreaktor zugeführt wird.

In dem Knetreaktor 2 erfolgt unter Wärmezugabe ein intensives Durchmischen des Rohstoffs mit dem Lösungsmittel und auch ein Verdampfen des Lösungsmittels, so dass eine relativ hochviskose Spinnlösung entsteht. Diese Spinnlösung wird dann über eine Austragseinrichtung 4 einem Pufferbehälter 5 zugeführt. Dort wird sie ggf. unter Wärmezugabe zwischengelagert. Sobald Spinnlösung gebraucht wird, erfolgt eine Entnahme der relativ hochviskosen Spinnlösung aus dem Pufferbehälter 5 durch eine volumetrische Pumpe 6, wobei die Pumpe 6 die Spinnlösung in einen Mischer 7 fördert. Auf dem Weg dorthin oder direkt in den Mischer wird in den Stoffstrom ebenfalls über eine volumetrische Pumpe 8 ein Lösungsmittel, bevorzugt Aminoxid-Monohydrat, zugegeben. Diese geschieht über die Zuleitung 9.

In dem Mischer 7 erfolgt nun durch das zugegebene Aminoxid-Monohydrat eine Verdünnung der Spinnlösung, wobei die Art des Mischens und der Mischer selbst von untergeordneter Bedeutung sind.

Aus dem Mischer 7 wird dann eine verdünnte Spinnlösung ausgetragen und mittels einer Pumpe 13 durch einen Spinnlösungsfilter 10 gedrückt. Hierdurch erfolgt nochmals eine Homogenisierung der Spinnlösung. Danach kann die Spinnlösung in einem weiteren Pufferbehälter 11 zwischengelagert werden, sofern dies notwendig ist. Das eigentliche Verspinnen erfolgt dann in einer Einrichtung 12.

| **Bezugszeichenliste** | | | | | |
|---|---|---|---|---|---|
| 1 | Zuleitung | 34 | | 67 | |
| 2 | Knetreaktor | 35 | | 68 | |
| 3 | Zuleitung | 36 | | 69 | |
| 4 | Austragseinrichtung | 37 | | 70 | |
| 5 | Pufferbehälter | 38 | | 71 | |
| 6 | Pumpe | 39 | | 72 | |
| 7 | Mischer | 40 | | 73 | |
| 8 | Pumpe | 41 | | 74 | |
| 9 | Zuleitung | 42 | | 75 | |
| 10 | Spinnlösungsfilter | 43 | | 76 | |
| 11 | Pufferbehälter | 44 | | 77 | |
| 12 | Einrichtung zum Verspinnen | 45 | | 78 | |
| 13 | Pumpe | 46 | | 79 | |
| 14 | | 47 | | | |
| 15 | | 48 | | | |
| 16 | | 49 | | | |
| 17 | | 50 | | | |
| 18 | | 51 | | E | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Herstellung von Fasern aus nachwachsenden Rohstoffen, insbesondere aus Zellulose, wobei die Zellulose zum Herstellen einer Spinnlösung mit einem Lösungsmittel derart vermischt wird, um eine relativ hochviskose Spinnlösung entstehen zu lassen, und anschliessend dieses Lösungsmittel zumindest teilweise aus der Mischung entfernt und die Spinnlösung einer Einrichtung zum Verspinnen zugeführt wird,
**dadurch gekennzeichnet,**
**dass** die Spinnlösung vor dem Verspinnen ein weiteres Mal verdünnt wird, geeignet, um ein Niveau der für die Spinnanlage benötigten Viskosität bzw. Zellulosekonzentration zu erhalten.

2. Verfahren nach Anspruch 1, **dadurch gekennzeichnet, dass** als Lösungsmittel ein tertiäres Aminoxid verwendet wird.

3. Verfahren nach Anspruch 2, **dadurch gekennzeichnet, dass** als Lösungsmittel Aminoxid-Monohydrat verwendet wird.

4. Verfahren nach einem der Ansprüche 1 bis 3, **dadurch gekennzeichnet, dass** die Spinnlösung vor dem Verspinnen wieder mit Aminoxid-Monohydrat verdünnt wird.

5. Verfahren nach wenigstens einem der Ansprüche 1 bis 4, **dadurch gekennzeichnet, dass** die Spinnlösung nach der Lösungsherstellung mittels einer volumetrischen Pumpe (6) unter Überdruck gefördert wird und mit einer zweiten volumetrischen Pumpe (8) Aminoxid-Monohydrat in den Stoffstrom dosiert wird.

6. Verfahren nach Anspruch 5, **dadurch gekennzeichnet, dass** die beiden volumetrisch fördernden Pumpen (6,8) so aufeinander abgestimmt sind, dass eine Spinnlösung mit der gewünschten niedrigen Konzentrationen von 4 bis 14% zu lösender Stoff in Aminoxid-Monohydrat entsteht.

7. Verfahren nach wenigstens elnem der Ansprüche 1 bis 6, **dadurch gekennzeichnet, dass** die verdünnte Spinnlösung in einem statischen oder dynamischen gerührten Mischer (7) behandelt wird, der entweder direkt online in eine nachfolgende Verteilungsleitung eingebaut oder davon getrennt angeordnet wird, wobei dieser Mischer (7) gegebenenfalls zusätzlich der Pufferung dient.

8. Verfahren nach wenigstens einem der Ansprüche 1 bis 7, **dadurch gekennzeichnet, dass** zumindest ein Teil der Rohrleitungen, Pumpen, Mischer etc., welche konzentrierte Formlösung, Aminoxid-Monohydrat oder verdünnte Formlösungen beinhalten, auf zirka 80 bis 120°C beheizt werden.

9. Verfahren nach wenigstens einem der Ansprüche 1 bis 8, **dadurch gekennzeichnet, dass** die konzentrierte Spinnlösung in einem Pufferbehälter (5) gelagert wird, oder direkt über eine Pumpe (6) dem Mischer zugeführt wird.

10. Verfahren nach wenigstens einem der Ansprüche 1 bis 9, **dadurch gekennzeichnet, dass** die verdünnte Spinnlösung, in einem Pufferbehälter (11) gelagert wird, oder direkt der Einrichtung (12) zum Verspinnen zugeführt wird.

11. Verfahren nach Anspruch 9 oder 10, **dadurch gekennzeichnet, dass** die verdünnte Spinnlösung in den Pufferbehälter (5,11) blasenfrei von unten, seitlich oder von oben eingetragen wird und nach unten blasenfrei ausgetragen wird.

12. Verfahren nach einem der Ansprüche 9 bis 11, **dadurch gekennzeichnet, dass** der Füllstand im Pufferbehälter (5,11) online, vorzugsweise mit einer Radarsonde gemessen wird.

13. Verfahren nach wenigstens einem der Ansprüche 9 bis 12, **dadurch gekennzeichnet, dass** die Formlösung im Pufferbehälter (5,11) unter einen Vordruck auf ihre Produktfläche gesetzt wird.

14. Vorrichtung zur Durchführung des Verfahrens nach wenigstens einem der Ansprüche 1 bis 13, **dadurch gekennzeichnet, dass** zwischen einem Knetreaktor (2) und der Einrichtung (12) zum Verspinnen der Spinnlösung ein Mischer (7) zur Verringerung der Viskosität der Spinnlösung eingeschaltet ist,

15. Vorrichtung nach Anspruch 14, **dadurch gekennzeichnet, dass** zwischen Knetreaktor (2) und/oder Mischer (7) und Einrichtung (12) zum Verspinnen der Spinnlösung, ein Pufferbehälter (5) vorgesehen ist.

## Claims

1. A method for the production of fibres from renewable raw materials, in particular from cellulose, the cellulose, in order to produce a spinning solution, being mixed with a solvent so as to produce a relatively highly viscous spinning solution, and then this solvent being at least partially removed from the mixture and the spinning solution being supplied to a means for spinning,
**characterised in that**
the spinning solution, before the spinning, is diluted one further time, suitably for obtaining a level of the viscosity or cellulose concentration required for the spinning installation.

2. A method according to Claim 1, **characterised in that** a tertiary amine oxide is used as solvent.

3. A method according to Claim 2, **characterised in that** amine oxide monohydrate is used as solvent.

4. A method according to one of Claims 1 to 3, **characterised in that** the spinning solution before the spinning is diluted again with amine oxide monohydrate.

5. A method according to at least one of Claims 1 to 4, **characterised in that** the spinning solution, once the solution has been produced, is conveyed under excess pressure by means of a volumetric pump (6), and amine oxide monohydrate is metered into the flow of substance with a second volumetric pump (8).

6. A method according to Claim 5, **characterised in that** the two volumetrically conveying pumps (6, 8) are matched to one another such that a spinning solution with the desired low concentrations of 4 to 14% of substance to be dissolved in amine oxide monohydrate is produced.

7. A method according to at least one of Claims 1 to 6, **characterised in that** the diluted spinning solution is treated in a static or dynamic stirred mixer (7), which is either incorporated directly online in a subsequent distribution line or is arranged separately therefrom, this mixer (7) optionally additionally serving for buffering.

8. A method according to at least one of Claims 1 to 7, **characterised in that** at least some of the piping, pumps, mixers etc. which contain concentrated forming solution, amine oxide monohydrate or dilute forming solutions are heated to approximately 80 to 120°C.

9. A method according to at least one of Claims 1 to 8, **characterised in that** the concentrated spinning solution is stored in a buffer vessel (5), or is supplied to the mixer directly via a pump (6).

10. A method according to at least one of Claims 1 to 9, **characterised in that** the diluted spinning solution is stored in a buffer vessel (11) or is supplied directly to the means (12) for spinning.

11. A method according to Claim 9 or 10, **characterised in that** the diluted spinning solution is introduced into the buffer vessel (5, 11) in a bubble-free state from below, laterally or from above, and is discharged downwards in a bubble-free state.

12. A method according to one of Claims 9 to 11, **characterised in that** the filling level in the buffer vessel (5, 11) is measured online, preferably with a radar probe.

13. A method according to at least one of Claims 9 to 12, **characterised in that** the forming solution in the buffer vessel (5, 11) is placed under an initial pressure on its product surface.

14. A device for carrying out the method according to at least one of Claims 1 to 13, **characterised in that** a mixer (7) for reducing the viscosity of the spinning solution is inserted between a kneading reactor (2) and the means (12) for spinning the spinning solution.

15. A device according to Claim 14, **characterised in that** a buffer vessel (6) is provided between the kneading reactor (2) and/or mixer (7) and means (12) for spinning the spinning solution.

## Revendications

1. Procédé de fabrication de fibres à partir de matières primaires qui repoussent, en particulier de cellulose, la cellulose étant mélangée, pour préparer une solution de filage, avec un solvant de sorte que soit produite une solution de filage relativement hautement visqueuse, et ce solvant étant ensuite éliminé au moins partiellement du mélange et la solution de filage étant alimentée vers un dispositif à filer,
**caractérisé par le fait**
**que** la solution de filage est, avant le filage, à nouveau diluée, de manière appropriée pour obtenir un niveau de viscosité ou de concentration de cellulose requis pour l'installation à filer.

2. Procédé selon la revendication 1, **caractérisé par le fait qu'**il est utilisé, comme solvant, un oxyde d' amine tertiaire.

3. Procédé selon la revendication 2, **caractérisé par le fait qu'**il est utilisé, comme solvant, un monohydrate d'oxyde d' amine.

4. Procédé selon l'une des revendications 1 à 3, **caractérisé par le fait que** la solution de filage est, avant le filage, à nouveau diluée par un monohydrate d'oxyde d'amine.

5. Procédé selon au moins l'une des revendications 1 à 4, **caractérisé par le fait que** la solution de filage est, après préparation de la solution, acheminée sous surpression à l'aide d'une pompe volumétrique (6) et que du monohydrate d'oxyde d'amine est, à l'aide d'une deuxième pompe volumétrique (8), amené de manière dosée dans le flux de matière.

6. Procédé selon la revendication 5, **caractérisé par le fait que** les deux pompes de refoulement volumétrique (6,8) sont accordées l'une sur l'autre de sorte qu'il soit obtenu une solution de filage aux faibles concentrations souhaitées de 4 à 14% de matière à dissoudre dans le monohydrate d'oxyde d' amine.

7. Procédé selon au moins l'une des revendications 1 à 6, **caractérisé par le fait que** la solution de filage diluée est traitée dans un mélangeur (7) à agitation statique ou dynamique qui est soit incorporé directement en ligne dans une conduite de distribution successive, soit disposé séparément de cette dernière, ce mélangeur (7) servant éventuellement en outre au tamponnage.

8. Procédé selon au moins l'une des revendications 1 à 7, **caractérisé par le fait qu'**au moins une partie des tuyauteries, pompes, mélangeurs, etc., qui contiennent une solution de moulage, du monohydrate d'oxyde d'amine ou des solutions de moulage diluées, sont chauffés à environ 80 à 120°C.

9. Procédé selon au moins l'une des revendications 1 à 8, **caractérisé par le fait que** la solution de filage concentrée est stockée dans un réservoir-tampon (5), ou est alimentée directement vers le mélangeur par l'intermédiaire d'une pompe (6).

10. Procédé selon au moins l'une des revendications 1 à 9, **caractérisé par le fait que** la solution de filage diluée est stockée dans un réservoir-tampon (11), ou est alimentée directement vers le dispositif (12) à filer.

11. Procédé selon la revendication 9 ou 10, **caractérisé par le fait que** la solution de filage diluée est entrée sans bulles depuis le bas, latéralement ou depuis le haut dans le réservoir-tampon (5,11) et est sorti sans bulles vers le bas.

12. Procédé selon l'une des revendications 9 à 11, **caractérisé par le fait que** l'état de remplissage dans le réservoir-tampon (5,11) est mesuré en ligne, de préférence à l'aide d'une sonde radar.

13. Procédé selon au moins l'une des revendications 9 à 12, **caractérisé par le fait que** la solution de moulage dans le réservoir-tampon (5,11) est mise sous pré-pression sur sa face de produit.

14. Dispositif pour mettre en oeuvre le procédé selon au moins l'une des revendications 1 à 13, **caractérisé par le fait qu'**entre un réacteur de pétrissage (2) et le dispositif (12) à filer la solution de filage est intercalé un mélangeur (7) destiné à réduire la viscosité de la solution de filage.

15. Dispositif selon la revendication 14, **caractérisé par le fait qu'**entre le réacteur de pétrissage (2) et/ou le mélangeur (7) et le dispositif (12) à filer la solution de filage est prévu un réservoir-tampon (5).
